# EUROPÄISCHE PATENTSCHRIFT

(11) **EP 3 862 229 B1**
(45) Veröffentlichungstag und Bekanntmachung des Hinweises auf die Patenterteilung: **02.04.2025**
(21) Anmeldenummer: 21151526.7
(22) Anmeldetag: 14.01.2021
(51) Int. Cl.: B60R 13/04, B62D 33/06

(54) **NUTZFAHRZEUG MIT LUFTANSAUGKANAL UND AUSSENABDECKUNG**
COMMERCIAL VEHICLE WITH AIR INTAKE DUCT AND OUTER COVER
VÉHICULE UTILITAIRE POURVU DE CONDUIT D'ADMISSION D'AIR ET DE COUVERCLE EXTERNE

(30) Priorität: 04.02.2020 DE 102020000736
(43) Veröffentlichungstag der Anmeldung: 11.08.2021
(73) Patentinhaber: MAN Truck & Bus SE, 80995 München (DE)
(72) Erfinder: Schmitz, Andreas, 80995 München (DE); Geiger, Sebastian, 80995 München (DE); Graser, Thomas, 80995 München (DE)
(74) Vertreter: v. Bezold & Partner Patentanwälte - PartG mbB

(56) Entgegenhaltungen:
- WO-A1-2009/082272
- DE-U1- 9 002 753
- US-A- 5 042 603

## Beschreibung

Die Erfindung betrifft ein Nutzfahrzeug, vorzugsweise einen Lastkraftwagen, mit einem Luftansaugkanal und einer Außenabdeckung für einen Einlass des Luftansaugkanals.

Lastkraftwagen mit Brennkraftmaschine benötigen eine Frischluftzuführung zur Brennkraftmaschine. Die Frischluft kann über ein Ansaugkanalsystem aus der Umgebung angesaugt werden. Der Einlass zum Kanalsystem kann dabei so positioniert sein, dass möglichst wenig Staub, Dreck oder Heißluft aus der Motorabwärme angesaugt wird. Beispielsweise kann der Einlass in Dachhöhe oder zumindest in Kabinenhöhe angeordnet sein.

Es ist möglich, dass der Einlass mittels einer teilweise durchlässigen Abdeckung abgedeckt wird, sodass keine größeren Partikel oder gar brennende Zigaretten eingesaugt werden können. Die Anbindung der Abdeckung kann dabei so gelöst werden, dass diese direkt auf dem Einlass angebracht wird. Dies kann allerdings den entscheidenden Nachteil haben, dass durch die elastische Anbindung des Ansaugkanalsystems am Fahrerhaus kein definiertes Spaltmaß zwischen der Abdeckung und dem Fahrerhaus realisierbar ist. Dies kann auch optisch wenig ansprechend sein. Bei einem Kontakt der Abdeckung mit dem Fahrerhaus können zudem Dröhngeräusche entstehen und die Abdeckung beschädigt werden oder zumindest schneller verschleißen.

Die DE 90 02 753 U1 offenbart ein Fahrerhaus eines Lastkraftwagens, auf das eine Schlafkabine aufgesetzt ist. Zwischen der Oberkante des Fahrerhauses und der Schlafkabine ist eine Adapterzarge angeordnet. Im hinteren Seitenbereich des Fahrerhauses befinden sich in der Zarge Lufteinlassöffungen, die mit Grillgittern verkleidet sind. Die Rückwand des Fahrerhauses ist im Bereich ihrer an diese Seitenwand anschließenden Eckkante mit einen integrierten, senkrecht verlaufenden Luftkanal versehen. An seinem oberen Ende steht dieser Kanal mit den von der Adapterzarge gebildeten Hohlraum in Verbindung.

Die DE 35 31 468 A1 offenbart eine Luftzuführvorrichtung mit einer Außenwand, die in ihrem oberen Abschnitt mit einer Lufteinlassöffnung versehen ist, die durch eine Gitterstruktur abgedeckt ist. Die Gitterstruktur ist durch Bolzen über der Lufteinlassöffnung befestigt. Eine Innenwand der Luftzuführvorrichtung ist im Wesentlichen flach und an die Außenform der Seitenwand der Fahrerkabine angepasst. Eine Vielzahl von Befestigungsarmen ist mittels Bolzenverbindungen an den vorderen und rückwärtigen Abschnitten der Innenwand befestigt. Obere und untere Befestigungsmittel sind an der Seitenwand der Fahrerkabine befestigt, an welche die Befestigungsarme mittels vertikaler Bolzenverbindungen montiert sind. Ein elastisches Dämpfungselement ist vorgesehen, vorzugsweise aus Gummi, welches zwischen jedem der Befestigungsarme und dem zugehörigen Befestigungsmittel angeordnet ist.

Die US 5,042,603 A offenbart eine Motorlufteinlassvorrichtung, die auf einer LKW-Haube montiert werden kann, um einen Luftstrom zu erfassen, der über eine Kanalanordnung innerhalb der Haube dem Motor zugeführt werden soll. Insbesondere wird dabei eine Staulufteinlassvorrichtung offenbart, die so konfiguriert ist, dass sie den erforderlichen Motorluftstrom in den Haubenkanal mit maximaler Strömungseffizienz und auch minimalem Luftwiderstand am Fahrzeug aufnimmt, während sie Wasser aus dem Luftstrom, der in denselben eintritt, entfernt und verhindert, dass Wasser von der Haubenoberfläche in den Kanal und den Motor gelangt.

Die DE 90 02 753 U offenbart ein Fahrerhaus für Lastkraftwagen nach dem Oberbegriff von Anspruch 1, mit aufgesetzter Schlafkabine o.dgl., wobei zwischen der Unterkante der aufgesetzten Kabine und der Oberkante (des Daches) des Fahrerhauses als Übergang eine Adapterzarge angeordnet ist. Die Adapterzarge bzw. Zarge umschließt einen Hohlraum, der aus der Seitenwandung des Fahrerhauses nahe dessen Oberkante, dem Boden der Kabine nahe deren unterer Seitenkante und dem Hauptteil der Adapterzarge bzw. Zarge in Form einer schrägen Wandung besteht, wodurch dieser Hohlraum einen etwa dreieckigen Querschnitt aufweist mit der schrägen Wandung der Adapterzarge bzw. Zarge als Basis. Die Wandung der Adapterzarge ist ferner mit Lufteinlassöffnungen versehen, wobei ferner in der Rückwand des Fahrerhauses ein senkrechter Luftkanal ausgebildet ist, der an seinem oberen Ende mit dem von der Adapterzarge bzw. Zarge gebildeten Hohlraum in Verbindung steht und an seinem unteren, etwa in Höhe des Bodens des Fahrerhauses liegenden Ende an die Luftansaugleitung des Motors angeschlossen ist.

Der Erfindung liegt die Aufgabe zu Grunde, eine alternative und/oder verbesserte Technik zum Abdecken eines Einlasses eines Luftansaugkanals eines Nutzfahrzeugs zu schaffen.

Die Aufgabe wird gelöst durch die Merkmale gemäß dem unabhängigen Anspruch 1. Vorteilhafte Weiterbildungen sind in den abhängigen Ansprüchen und der Beschreibung angegeben. Ein Aspekt betrifft ein Nutzfahrzeug, vorzugsweise einen Lastkraftwagen. Das Nutzfahrzeug weist einen Fahrerhausrohbau (z. B. Fahrerhauskarosserie) mit einer Längsaußenseite (z. B. Fahrerlängsaußenseite oder Beifahrerlängsaußenseite) auf. Das Nutzfahrzeug weist einen Luftansaugkanal auf, der an dem Fahrerhausrohbau angebracht ist und einen Einlass aufweist, der an der Längsaußenseite angeordnet ist. Das Nutzfahrzeug weist eine (z. B. durchlässige und/oder mehrteilige, vorzugsweise zweiteilige) Außenabdeckung (z. B. Außenansaugabdeckung) auf, die den Einlass abdeckt und fest an dem Fahrerhausrohbau angebracht ist.

Luft kann die Außenabdeckung passieren (z. B. durchströmen) und in den Einlass einströmen. Vorteilhaft ermöglicht die fahrerhausfeste Anbringung der Außenabdeckung ein definiertes Spaltmaß zwischen der Außenabdeckung und dem Fahrerhaus und ggf. zusätzlich am Fahrerhaus angebrachten Aerodynamikelementen, z. B. Sideflap. Die Montagetoleranzen können deutlich verringert werden. Damit kann auch eine aerodynamisch bevorzugte, saubere Flucht der Außenseitenflächen des Fahrerhauses erreicht werden. Störende Dröhngeräusche können verhindert werden, da keine vibrierende Anlage der Außenabdeckung an dem Fahrerhaus besteht.

Vorteilhaft ist die Außenabdeckung durch die fahrerhausfeste Anbringung nicht fest an oder auf der Einlassöffnung bzw. dem Luftansaugkanal montiert. Vielmehr kann die Außenabdeckung unter konstruktiver Umgehung der Einlassöffnung bzw. des Luftansaugkanals fest an dem Fahrerhausrohbau angebracht sein, vorzugsweise direkt. Auf diese Weise kann, wie bereits erwähnt, erreicht werden, dass keine vibrierende Anlage der Außenabdeckung an dem Fahrerhaus besteht, wodurch störende Dröhngeräusche verhindert werden können. Im Gegensatz dazu sind herkömmliche Außenabdeckungen fest an einer jeweiligen Einlassöffnung montiert, sodass keine fahrerhausfeste Anbringung der Außenabdeckung besteht, wodurch es zu störenden Dröhngeräuschen durch eine vibrierende Anlage der Außenabdeckung an dem Fahrerhaus kommen kann.

Erfindungsgemäß ist die Außenabdeckung entkoppelt von dem Einlass und dem Luftansaugkanal. Dadurch kann eine Vibration der Außenabdeckung aufgrund einer Vibration des Luftansaugkanals verhindert werden.

In einem Ausführungsbeispiel weist das Nutzfahrzeug eine, vorzugsweise elastisch deformierbare, Dichtung auf, die zwischen dem Einlass und der Außenabdeckung angeordnet ist.

In einem weiteren Ausführungsbeispiel weist die Außenabdeckung ein Trägerteil und ein Blendenteil auf. Diese kann eine Montage und eine Demontage erleichtern. Zudem können ästhetische Gesichtspunkte stärkere Beachtung finden, wonach bspw. eine von außen unsichtbare Verbindung zwischen der Außenabdeckung und dem Fahrerhausrohbau besteht, da die Befestigungsmittel (z. B. Schrauben) unter dem Blendenteil verborgen sein können. Zusätzlich kann das Blendenteil bei Beschädigung einfach ausgetauscht werden. Ebenso kann das Blendenteil einfach gewechselt werden, wenn optische oder aerodynamische Änderungen gewünscht sind. Hierfür muss die tragende Struktur, d.h. das Trägerteil, nicht ausgetauscht oder demontiert werden.

In einer Ausführungsform ist das Trägerteil ein Blechteil, vorzugsweise ein Blechziehteil.

In einer weiteren Ausführungsform liegt das Trägerteil an einer, vorzugsweise elastisch deformierbaren, Dichtung, die zwischen dem Einlass und dem Trägerteil angeordnet ist, an. Damit kann das bevorzugt als Blechteil ausgeführte Trägerteil eine Fläche zur Anlage an der Dichtung aufweisen, was bei einem Spritzgussteil alleine, wie z. B. dem Blendenteil, so nicht oder nicht ohne weiteres möglich wäre.

In einer weiteren Ausführungsform weist das Trägerteil mindestens einen Gitterbereich auf, der den Einlass abdeckt. Der Einlass kann somit vor großen Partikeln und Zigaretten usw. geschützt sein, wobei eine Ansaugung von Luft durch den mindestens einen Gitterbereich hindurch gewährleistet ist.

In einer weiteren Ausführungsform ist das Trägerteil im Wesentlichen schalenförmig und/oder streifenförmig.

In einer weiteren Ausführungsform ist das Trägerteil fest an dem Fahrerhausrohbau angebracht, vorzugsweise mittels mehrerer Schraubverbindungen.

In einer Ausführungsvariante ist das Blendenteil ein, vorzugsweise unlackiertes oder lackiertes, Kunststoffteil (z. B. Kunststoffspritzgussteil).

In einer weiteren Ausführungsvariante weist das Blendenteil mindestens einen, vorzugsweise kiemenförmigen, Durchlass auf, der den Einlass abdeckt. Bevorzugt deckt der mindestens eine Durchlass auch den mindestens einen Gitterbereich des Trägerteils ab.

In einer weiteren Ausführungsvariante ist das Blendenteil im Wesentlichen schalenförmig und/oder streifenförmig.

In einer weiteren Ausführungsform ist das Trägerteil fest an dem Fahrerhausrohbau angebracht, vorzugsweise mittels mehrerer Schraubverbindungen.

In einer Ausführungsvariante ist das Blendenteil ein, vorzugsweise unlackiertes oder lackiertes, Kunststoffteil (z. B. Kunststoffspritzgussteil).

In einer weiteren Ausführungsvariante weist das Blendenteil mindestens einen, vorzugsweise kiemenförmigen, Durchlass auf, der den Einlass abdeckt. Bevorzugt deckt der mindestens eine Durchlass auch den mindestens einen Gitterbereich des Trägerteils ab.

In einer weiteren Ausführungsvariante ist das Blendenteil im Wesentlichen schalenförmig und/oder streifenförmig.

In einem Ausführungsbeispiel ist das Blendenteil von dem Trägerteil getragen, und/oder das Blendenteil ist lösbar an dem Trägerteil angebracht.

In einem weiteren Ausführungsbeispiel ist das Blendenteil mittels einer lösbaren Führungs- und/oder Steckverbindung an dem Trägerteil angebracht. Vorzugsweise kann das Blendenteil lösbar auf das bereits an dem Fahrerhausrohbau fest angebrachte Trägerteil aufgeschoben werden.

In einem weiteren Ausführungsbeispiel weisen das Blendenteil und das Trägerteil im Wesentlichen miteinander übereinstimmende Außenkonturen auf.

In einer weiteren Ausführungsform ist das Blendenteil an dem Trägerteil, vorzugsweise parallel zu einer Längsachse des Nutzfahrzeugs, verschiebbar geführt, und/oder das Blendenteil ist an dem Trägerteil arretierbar (z. B. selbsttätig und/oder in einer Endmontageposition).

In einer Ausführungsvariante ist das Blendenteil mittels einer nur fahrerhausrückseitig sichtbaren und/oder nur fahrerhausrückseitig zugänglichen Schraubverbindung an dem Trägerteil angebracht (z. B verliersicher). Vorzugsweise kann die Schraubverbindung so geschützt und ästhetisch nicht-störend angeordnet sein.

In einer weiteren Ausführungsvariante weist das Blendenteil mindestens ein, vorzugsweise hakenförmiges oder L-förmiges, Führungselement auf, das vorzugsweise in mindestens eine, bevorzugt ausgeschnittene, Führung des Trägerteils eingeschoben oder einschiebbar ist, vorzugsweise parallel zu einer Längsachse des Nutzfahrzeugs.

In einer weiteren Ausführungsvariante weist das Blendenteil mindestens ein, vorzugsweise domförmiges, Arretierelement auf, das vorzugsweise in mindestens eine, bevorzugt ausgeschnittene, Arretierelementaufnahme des Trägerteils eingreift, besonders bevorzugt wenn das mindestens eine Führungselement in die mindestens eine Führung eingeschoben ist.

In einem Ausführungsbeispiel weist das Blendenteil mindestens ein, vorzugsweise domförmiges, Stützelement auf, das sich vorzugsweise an mindestens einem, vorzugsweise erhabenen, Stützabschnitt des Trägerteils abstützt (z. B anliegend).

In einem weiteren Ausführungsbeispiel weist der Trägerteil einen, vorzugsweise stiftförmigen und/oder elastisch deformierbaren, Anschlagpuffer auf, der einen Anschlag an den Fahrerhausrohbau begrenzt, vorzugsweise bezüglich zu einer Längsachse des Nutzfahrzeugs.

In einem weiteren Ausführungsbeispiel weist der Fahrerhausrohbau mindestens einen, vorzugsweise parallel zu einer Längsachse des Nutzfahrzeugs, vorstehenden, vorzugsweise plattenförmigen, Bereich auf, an dem die Außenabdeckung fest angebracht ist. Die vorstehenden Bereiche können extra als Erweiterungen am Fahrerhausrohbau vorgesehen sein, um eine Befestigung der Außenabdeckung zu ermöglichen.

In einem weiteren Ausführungsbeispiel weist der Fahrerhausrohbau einen Dachbereich auf, an dem die Außenabdeckung fest angebracht ist, und/oder der Fahrerhausrohbau weist einen Kotflügelbereich auf, an dem die Außenabdeckung fest angebracht ist.

Es ist möglich, dass der Dachbereich ein Bereich eines Dachs des Fahrerhauses ist. Es ist auch möglich, dass der Dachbereich ein Karosseriebereich des Fahrerhausrohbaus ist, der an ein Dach des Fahrerhauses angrenzt und/oder an dem ein Dach des Fahrerhauses befestigt ist.

In einer Ausführungsvariante ist die Außenabdeckung bezüglich einer Vorwärtsfahrtrichtung des Nutzfahrzeugs hinter einer Tür (z. B. Fahrertür oder Beifahrertür) angeordnet, und/oder die Außenabdeckung erstreckt sich zwischen einem Kotflügelbereich des Fahrerhausrohbaus und einem Dachbereich des Fahrerhausrohbaus.

In einer weiteren Ausführungsvariante ist die Außenabdeckung an der Längsaußenseite des Fahrerhausrohbaus und/oder angrenzend an eine Rückseite des Fahrerhausrohbaus angeordnet.

In einem Ausführungsbeispiel ist der Luftansaugkanal, vorzugsweise elastisch, entkoppelt an dem Fahrerhausrohbau angebracht, und/oder der Luftansaugkanal ist mit einer Antriebseinrichtung, vorzugsweise einer Brennkraftmaschine, des Nutzfahrzeugs (z. B. fluidisch) verbunden (z. B. zum Zuführen von Verbrennungsluft/Frischluft).

In einem weiteren Ausführungsbeispiel ist der Luftansaugkanal bezüglich einer Vorwärtsfahrtrichtung des Nutzfahrzeugs hinter einer Tür des Nutzfahrzeugs angeordnet.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Rückansicht eines Fahrerhauses eines Nutzfahrzeugs;
- Figur 2: eine perspektivische Seitenansicht eines Seitenabschnitts eines Fahrerhauses eines Nutzfahrzeugs;
- Figur 3: eine perspektivische Montagezeichnung;
- Figur 4: eine weitere perspektivische Montagezeichnung;
- Figur 5: eine Vorderseite eines Trägerteils einer beispielhaften Außenabdeckung zum Abdecken eines Einlasses eines Luftansaugkanals;
- Figur 6: eine Rückseite des Trägerteils von Figur 5;
- Figur 7: eine Vorderseite eines Blendenteils der Außenabdeckung;
- Figur 8: eine Schnittansicht entlang einer Linie C-C in Figur 7;
- Figur 9: eine Rückseite des Blendenteils von Figur 7;
- Figur 10: eine Schnittansicht entlang einer Linie E-E in Figur 9; und
- Figur 11: eine Schnittansicht entlang einer Linie D-D in Figur 9.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

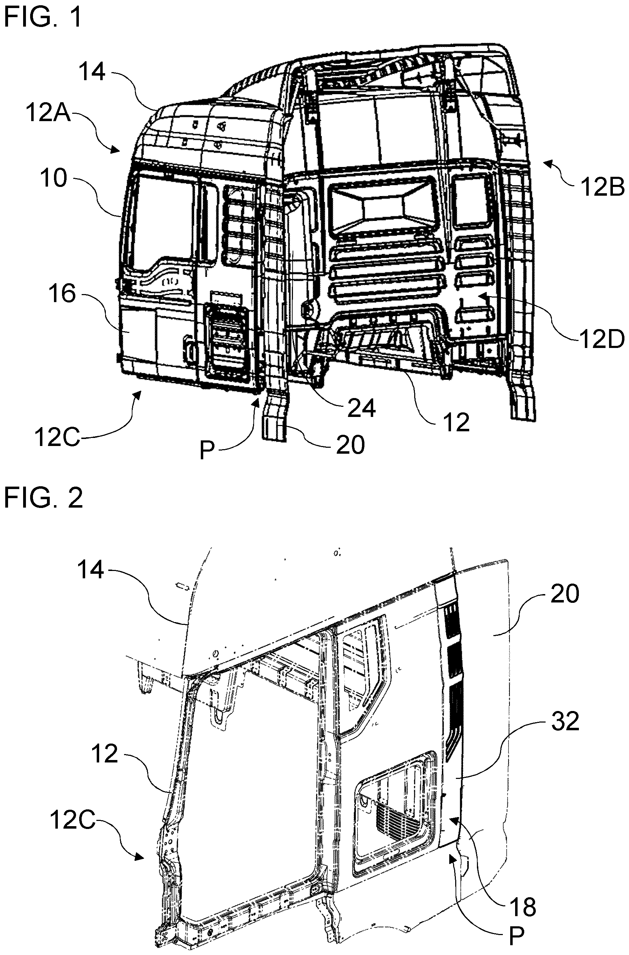

Figur 1 zeigt ein Fahrerhaus 10 eines Nutzfahrzeugs. Das Nutzfahrzeug ist bevorzugt als Lastkraftwagen ausgeführt. Das Fahrerhaus 10 ist aus einem Fahrerhausrohbau 12 mit bspw. aufgesetztem Dach 14 gebildet. Eine Tür (z. B. Fahrertür oder Beifahrertür) 16 ist schwenkbar an dem Fahrerhausrohbau 12 angebracht. Der Fahrerhausrohbau 12 weist eine Vorderseite 12A, zwei Längsaußenseiten 12B und 12C und eine Rückseite 12D auf. Die Längsaußenseiten 12B und 12 verbinden die Vorderseite 12A mit der Rückseite 12D.

In den Figuren 1 und 2 ist mit einem Bezugszeichen P eine Position markiert, an der eine Außenabdeckung 18 (siehe Figur 2) gemäß der vorliegenden Offenbarung anzuordnen ist. Die Position P ist bezüglich einer Vorwärtsfahrtrichtung des Nutzfahrzeugs hinter der Tür 16 angeordnet. Die Position P ist bezüglich der Vorwärtsfahrtrichtung vor der Rückseite 12D angeordnet, vorzugsweise angrenzend an die Rückseite 12D. Zweckmäßig kann die Position P bezüglich der Vorwärtsfahrtrichtung vor einem sogenannten Sideflap 20 angeordnet. Der Sideflap 20 kann an der Rückseite 12D angebracht sein, z. B. schwenkbar.

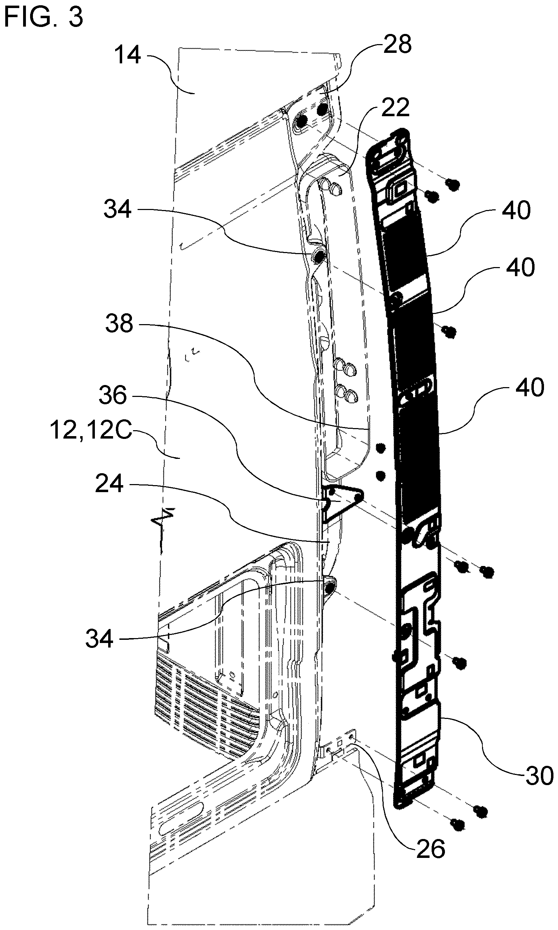

Die Außenabdeckung (bzw. Außenansaugabdeckung) 18 dient zum Abdecken eines Einlasses 22 eines Luftansaugkanals 24 (siehe insbesondere Figur 3). Der Luftansaugkanal 24 ist, vorzugsweise elastisch, entkoppelt an dem Fahrerhausrohbau 12 angebracht, z. B. mittels Gummielementen. Der Luftansaugkanal 24 kann große Herstellungs- und Montagetoleranzen aufweisen, da er bspw. als ein Kunststoffblasteil gebildet sein kann. Der Luftansaugkanal 24 kann über den Einlass 22 Luft durch die Außenabdeckung 18 hindurch ansaugen. Die angesaugte Luft kann zweckmäßig einer Antriebseinrichtung, z. B. einer Brennkraftmaschine, des Nutzfahrzugs zugeführt werden, z. B. als Verbrennungsluft. Die Außenabdeckung 18 kann schalenförmig und streifenförmig sein. Die Außenabdeckung 18 kann sich zwischen einem Kotflügelbereich 26 und einem Dachbereich 28 des Fahrerhausrohbaus 12 erstrecken (siehe ebenfalls Figur 3). Der Dachbereich 28 kann noch zur Karosserie gehören und unterhalb eines Dachkranzes angeordnet sein. Prinzipiell ist es auch möglich, dass der Luftansaugkanal 24 und/oder der Einlass 22 anders angeordnet ist, vorzugsweise an der Längsaußenseite 12C des Fahrerhausrohbaus 12.

Eine Besonderheit der Außenabdeckung 18 ist deren Anbringung. Die Außenabdeckung 18 ist fahrerhausfest angebracht. Im Einzelnen ist die Außenabdeckung 18 fest am Fahrerhausrohbau 12 angebracht. Die Außenabdeckung 18 ist entkoppelt von dem Einlass 22 und dem Luftansaugkanal 24.

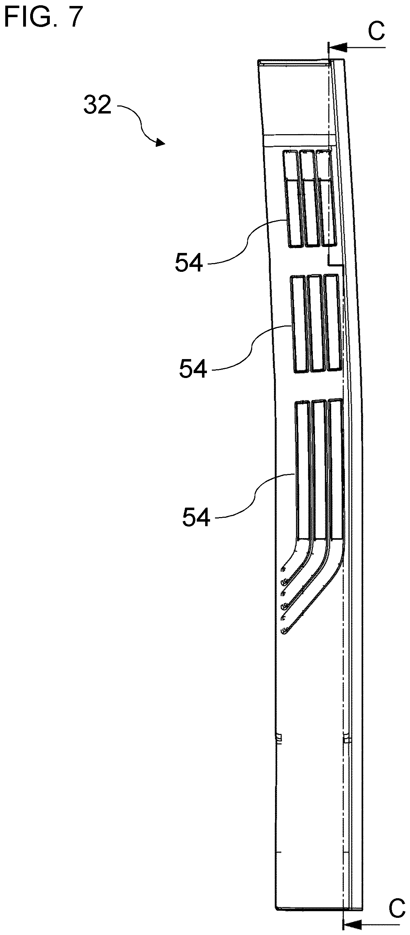

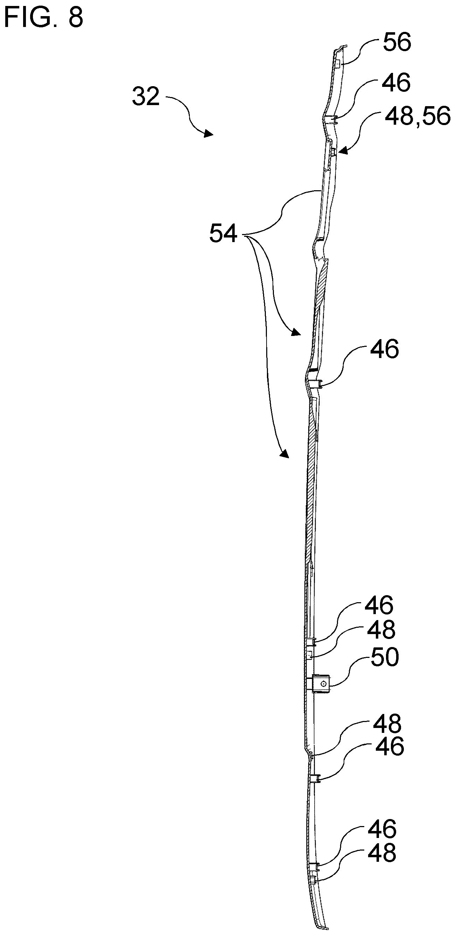

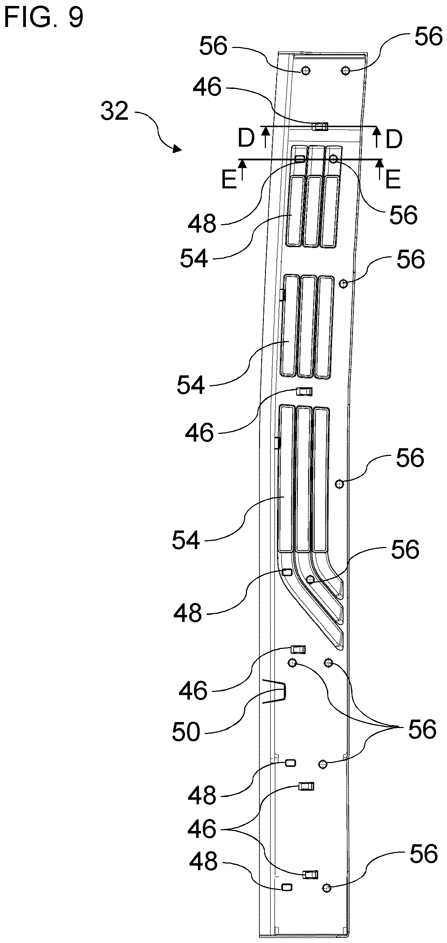

Die Außenabdeckung 18 kann zweckmäßig zweiteilig sein. Die Außenabdeckung 18 kann ein Trägerteil 30 und ein Blendenteil 32 aufweisen. Das Trägerteil 30 ist in den Figuren 3 bis 6 dargestellt. Das Blendenteil 32 ist in den Figuren 2, 4 und 7 bis 11 dargestellt. Das Trägerteil 30 trägt das Blendenteil 32. Das Blendenteil 32 deckt das Trägerteil 30 ab. Das Blendenteil 32 und das Trägerteil 30 können im Wesentlichen miteinander übereinstimmende Außenkonturen aufweisen. Das Blendenteil 32 kann bevorzugt mittels einer Führungs- und/oder Steckverbindung an dem Trägerteil 30 angebracht sein, vorzugsweise von außen uneinsehbar.

Figur 3 zeigt eine Montage des Trägerteils 30. Das Trägerteil 30 wird fest an dem Fahrerhausrohbau 12 angebracht. Beispielsweise kann der Fahrerhausrohbau 12 mindestens einen vorstehenden Bereich 34 aufweisen. Der vorstehende Bereich 34 kann in oder entgegengesetzt zu der Vorwärtsfahrtrichtung vorstehen. Der vorstehende Bereich 34 kann plattenförmig sein. Der vorstehende Bereich 34 kann eine Zungenform oder eine Laschenform aufweisen. Bei mehreren vorstehenden Bereichen 34 können diese in der Vertikalrichtung des Fahrerhausrohbaus 12 beabstandet voneinander sein. Es ist auch möglich, dass mindestens ein Zwischenhalter 36 zwischen dem Fahrerhausrohbau 12 und dem Trägerteil 30 angeordnet ist. Das Trägerteil 30 wird fest an den vorstehenden Bereichen 34, dem Zwischenhalter 36, dem Dachbereich 28 und/oder dem Kotflügelbereich 26 angebracht. Die Anbringung kann lösbar sein. Beispielsweise können Schraubverbindungen das Trägerteil 30 fest am Fahrerhausrohbau 12 anbringen, wie in Figur 3 beispielhaft dargestellt ist. In den vorstehenden Bereichen 34, dem Dachbereich 28 und/oder dem Kotflügelbereich 26 können bspw. Blindnietmuttern eingebracht sein, in die Schrauben einschraubbar sind.

Das Trägerteil 30 ist bevorzugt nicht fest am Einlass 22 angebracht. Stattdessen ist eine Entkoppelung zum Einlass 22 bevorzugt. Es kann eine vorzugsweise elastisch deformierbare Dichtung 38, z. B. Gummidichtung, zwischen dem Einlass 22 und einer Rückseite des Trägerteils 30 angeordnet sein. Die Dichtung 38 dichtet an einer ausgeformten und/oder an die Dichtung 38 angepassten Fläche des Trägerteils 30 ab.

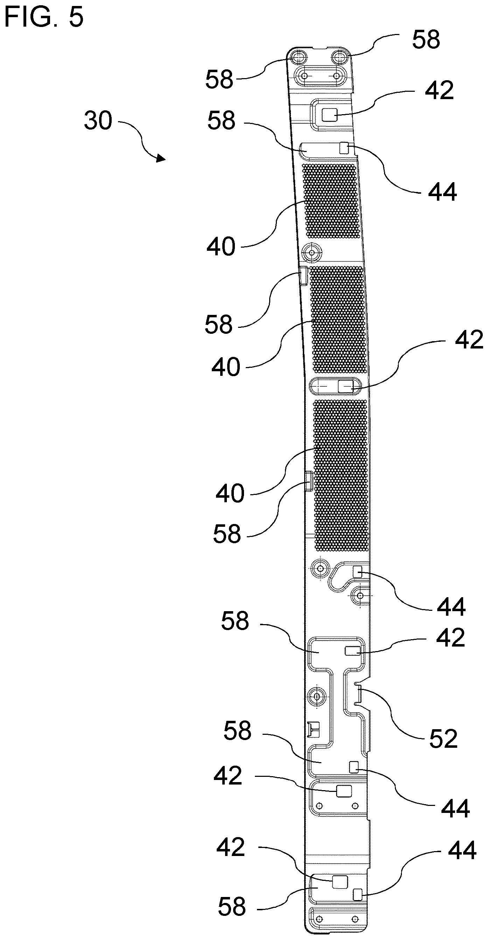

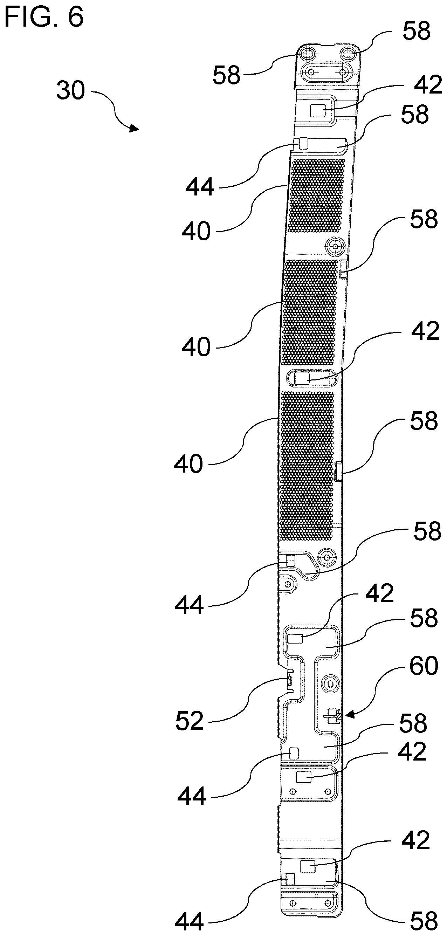

Eine beispielhafte Ausführung des Trägerteils 30 ist nachfolgend unter Bezugnahme auf die Figuren 5 und 6 näher beschrieben.

Figuren 5 und 6 zeigen, dass das Trägerteil 30 mindestens einen Gitterbereich 40, mindestens eine Führung 42 und/oder mindestens eine Arretierelementaufnahme 44 aufweisen kann.

Der mindestens eine Gitterbereich 40 deckt den Einlass 22 schützend ab. Der Einlass 22 kann Luft durch den mindestens einen Gitterbereich 40 hindurch ansaugen. Der mindestens eine Gitterbereich 40 kann bspw. als ein Lochblech ausgeführt sein.

Mittels der mindestens einen Führung 42 und der Arretierelementaufnahme 44 kann das Blendenteil 32 an dem Trägerteil 30 angebracht werden. Die Führungen 42 und die Arretierelementaufnahmen 44 können als Ausschnitte ausgeführt sein. Die Führungen 42 und die Arretierelementaufnahmen 44 können in erhabenen Abschnitten einer Vorderseite des Trägerteils 30 angeordnet sein, z. B. zur Versteifung des Trägerteils 30. Die Führungen 42 können entlang einer Längsachse des Trägerteils 30 voneinander beabstandet sein. Die Arretierelementaufnahmen 44 können entlang einer Längsachse des Trägerteils 30 voneinander beabstandet sein.

Das Trägerteil 30 ist bevorzugt einteilig und/oder streifenförmig ausgeführt. Der mindestens eine Gitterbereich 40, die mindestens eine Führung 42 und/oder die mindestens eine Arretierelementaufnahme 44 können integral-einstückig in dem Trägerteil 30 ausgeführt sein. Bevorzugt ist das Trägerteil 30 ein Blechteil, besonders bevorzugt ein Blechziehteil. Das Trägerteil 30 kann sich zwischen einem Kotflügelbereich 26 und einem Dachbereich 28 des Fahrerhausrohbaus erstrecken (siehe ebenfalls Figur 3).

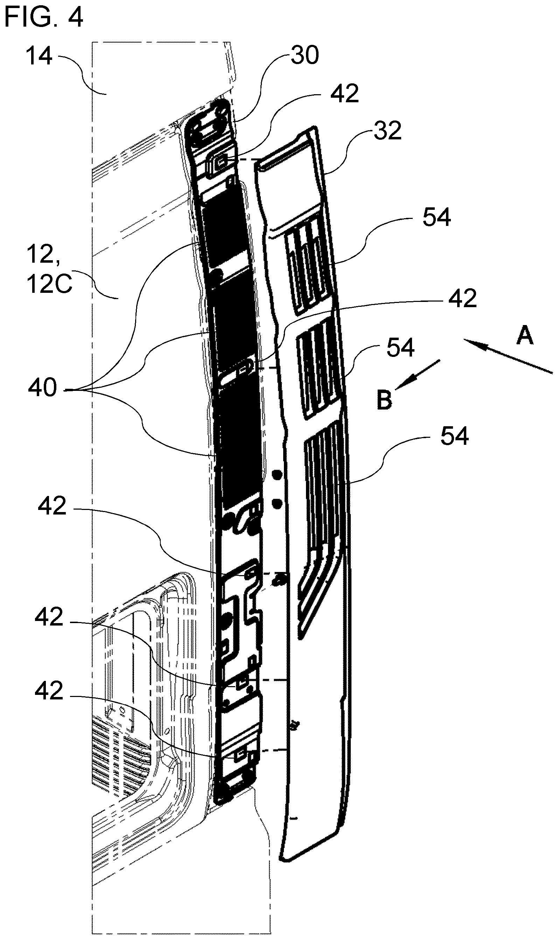

Figur 4 zeigt, dass, nachdem das Trägerteil 30 fest an dem Fahrerhausrohbau 12 angebracht wurde, das Blendenteil 32 an dem Trägerteil 30 befestigt werden kann. Hierzu kann das Blendenteil 32 zunächst in einer Richtung A (z. B. parallel zu einer Querachse des Nutzfahrzeugs) auf das Trägerteil 30 aufgesteckt werden. Dann kann das Blendenteil 32 entlang einer Richtung B (z. B. parallel zur Vorwärtsfahrtrichtung des Nutzfahrzeugs) relativ zum Trägerteil 30 verschoben werden, vorzugsweise bis das Blendenteil 32 an dem Trägerteil 30 arretiert wird.

Eine beispielhafte Ausführung des Blendenteils 32 ist nachfolgend unter Bezugnahme auf die Figuren 4 und 7 bis 11 näher beschrieben.

Das Blendenteil 32 kann mindestens ein Führungselement 46 und/oder mindestens ein Arretierelement 48 aufweisen.

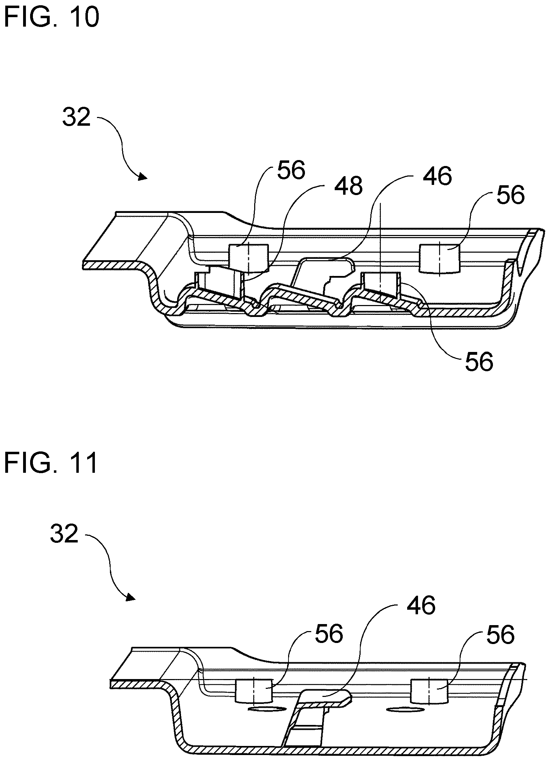

Das mindestens eine Führungselement 46 ist auf einer Rückseite des Blendenteils 32 angeordnet. Das mindestens eine Führungselement 46 des Blendenteils 32 ist an die mindestens eine Führung 42 des Trägerteils 30 angepasst. Eine Anzahl der Führungselemente 46 entspricht bevorzugt einer Anzahl der Führungen 42. Das mindestens eine Führungselement 46 ist bspw. hakenförmig oder L-förmig ausgeführt (siehe Figuren 10 und 11).

Beim Aufsetzen des Blendenteils 32 auf das Trägerteil 30 in der Richtung A in Figur 4 können die Führungselemente 46 durch die als Ausschnitte ausgeführten Führungen 42 durchtauchen. Die Führungselemente 46 sind somit auf einer Rückseite des Trägerteils 30 positioniert bzw. durchgreifen das Trägerteil 30. Beim anschließenden Verschieben des Blendenteils 32 in der Richtung B in Figur 4 führen die Führungselemente 46 das Blendenteil 32 entlang der Führungen 42, stützen es am Trägerteil 30 ab und hintergreifen das Trägerteil 30 mit zunehmender Verschiebung entlang der Richtung B. Die Führungselemente 46 können das Blendenteil 32 somit bereits in einer Vertikalrichtung und einer Querrichtung des Nutzfahrzeugs am Trägerteil 30 sichern.

Das mindestens eine Arretierelement 48 ist auf einer Rückseite des Blendenteils 32 angeordnet. Das mindestens eine Arretierelement 48 des Blendenteils 32 ist an die mindestens eine Arretierelementaufnahme 44 des Trägerteils 30 angepasst. Eine Anzahl der Arretierelemente 48 entspricht bevorzugt einer Anzahl der Arretierelementaufnahmen 44. Das mindestens eine Arretierelement 48 ist bspw. domförmig (z. B. stiftförmig oder zylindermantelförmig) ausgeführt (siehe Figur 10).

Das Verschieben des Blendenteils 32 entlang des Trägerteils 30 in der Richtung B in Figur 4 kann durch ein Eingreifen der Arretierelemente 48 in die als Ausschnitte ausgeführten Arretierelementaufnahmen 44 beendet werden. Das Blendenteil 32 wird entlang der Richtung B bzw. entlang einer Längsachse des Nutzfahrzeugs am Trägerteil 30 arretiert.

Das Blendenteil 32 ist somit entlang der Längsachse, der Querachse und der Vertikalachse des Nutzfahrzeugs am Trägerteil 30 durch Ineinandergreifen der Führungselemente 46 in die Führungen 42 und der Arretierelemente 48 in die Arretierelementaufnahmen 44 gesichert. Diese Sicherung ist von außen nicht sichtbar. Die Sicherung ist zudem in umgekehrter Reihenfolge als in Figur 4 dargestellt wieder lösbar.

Es ist möglich, dass bspw. eine zusätzliche Schraubverbindung das Blendenteil 32 am Trägerteil 30 sichert. Hierzu kann fahrerhausrückseitig eine Schraube durch eine Schraubenaufnahme 50 des Blendenteils 32 gesteckt werden. Die Schraube kann in eine entsprechende Schraubenaufnahme 52 (siehe Figur 6) des Trägerteils 30 eingeschraubt werden.

Die Schraubenaufnahmen 50, 52 können so ausgerichtet und angeordnet sein, dass die Schraube parallel zu der Vorwärtsfahrtrichtung bzw. der Längsachse des Nutzfahrzeugs verläuft und zweckmäßig nur fahrerhausrückseitig zugänglich und sichtbar ist. Die Schraubenaufnahme 50 kann auf einer Rückseite des Blendenteils 32 angeordnet sein. Die Schraubenaufnahme 50 kann ein Schraubenloch aufweisen, das parallel zu der Vorwärtsfahrtrichtung bzw. der Längsachse des Nutzfahrzeugs ausgerichtet ist. Die Schraubenaufnahme 52 kann auf einer Vorderseite des Trägerteils 30 angeordnet sein. Die Schraubenaufnahme 52 kann ein Schraubenloch aufweisen, das parallel zu der Vorwärtsfahrtrichtung bzw. der Längsachse des Nutzfahrzeugs ausgerichtet ist. Die Schraubenlöcher der Schraubenaufnahmen 50, 52 können miteinander fluchten, wenn das Blendenteil 32 an dem Trägerteil 30 arretiert ist.

Das Blendenteil 32 weist z. B. kiemenförmige Durchlässe 54 auf. Die Durchlässe 54 sind vor den Gitterbereichen 40 des Trägerteils 30 angeordnet. Der Einlass 22 kann Luft durch die Durchlässe 54 und die Gitterbereiche 40 hindurch ansaugen.

Das Blendenteil 32 ist bevorzugt einteilig und/oder streifenförmig ausgeführt. Der mindestens eine Durchlass 54, das mindestens eine Führungselement 46 und/oder das mindestens eine Arretierelement 48 können integral-einstückig in dem Blendenteil 32 ausgeführt sein. Bevorzugt ist das Blendenteil 32 ein Kunststoffteil, besonders bevorzugt ein unlackiertes oder zumindest außen lackiertes Kunststoffteil. Das Blendenteil 32 kann sich zwischen einem Kotflügelbereich 26 und einem Dachbereich 28 des Fahrerhausrohbaus erstrecken (siehe ebenfalls Figur 3).

In den Figuren 5 bis 11 ist ferner dargestellt, dass das Blendenteil 32 mehrere Stützelemente bzw. Abstandselemente 56 aufweisen kann. Die Stützelemente 56 können auf einer Rückseite des Blendenteils 32 angeordnet sein. Die Stützelemente 56 können voneinander beabstandet sein, insbesondere bezüglich einer Längsachse des Blendenteils 32. Die Stützelemente 56 können bspw. domförmig (z. B. zylindermantelförmig) sein.

Das Trägerteil 30 kann an die Stützelemente 56 angepasste Stützabschnitte 58 aufweisen. Die Stützabschnitte 58 können auf einer Vorderseite des Trägerteils 30 angeordnet sein. Die Stützabschnitte 58 können bspw. erhaben oder domförmig sein. Durch die erhabene Form / Domform können die Stützabschnitte 58 auch auf einer Rückseite des Trägerteils 30 als Sicken sichtbar sein.

Im aneinander angebrachten Zustand kann das Blendenteil 32 sich mittels der Stützelemente 56 an den Stützabschnitten 58 des Trägerteils 30 abstützen. Insbesondere können die Stützelemente 56 an den Stützabschnitten 58 anliegen, wenn die Arretierelemente 48 in den Arretierelementaufnahmen 44 aufgenommen sind. Besonders bevorzugt können die Stützelemente 56 und die Stützabschnitte 58 über eine gesamte Länge der Außenabdeckung 18 verteilt angeordnet sein.

Es ist auch möglich, dass das Trägerteil 30 einen Anschlagpuffer 60 aufweist (siehe Figur 6). Der Anschlagpuffer 60 kann auf einer Rückseite des Trägerteils 30 angeordnet sein. Der Anschlagpuffer 60 kann aus einem elastisch deformierbaren Werkstoff bestehen, z. B. aus einem Gummiwerkstoff. Der Anschlagpuffer 60 kann bspw. stift-, stopfen- oder pinförmig ausgeführt sein. Der Anschlagpuffer 60 kann parallel zur Vorwärtsfahrrichtung bzw. der Längsachse des Nutzfahrzeugs ausgerichtet sein. Der Anschlagpuffer 60 kann einen Anschlag des Trägerteils 30 beim Anbringen an den Fahrerhausrohbau 12 begrenzen und dämpfen, insbesondere bezüglich einer Positionierung bezüglich der Vorwärtsfahrtrichtung bzw. Längsachse des Nutzfahrzeugs.

### Bezugszeichenliste

- 10: Fahrerhaus
- 12: Fahrerhausrohbau
- 12A: Vorderseite
- 12B,12C: Längsaußenseite
- 12D: Rückseite
- 14: Dach
- 16: Tür
- 18: Außenabdeckung
- 20: Sideflap
- 22: Einlass
- 24: Luftansaugkanal
- 26: Kotflügelbereich
- 28: Dachbereich
- 30: Trägerteil
- 32: Blendenteil
- 34: Vorstehender Bereich
- 36: Zwischenhalter
- 38: Dichtung
- 40: Gitterbereich
- 42: Führung
- 44: Arretierelementaufnahme
- 46: Führungselement
- 48: Arretierelement
- 50: Schraubenaufnahme
- 52: Schraubenaufnahme
- 54: Durchlass
- 56: Stützelement
- 58: Stützabschnitt
- 60: Anschlagpuffer

## Patentansprüche

1. Nutzfahrzeug, vorzugsweise Lastkraftwagen, aufweisend:
einen Fahrerhausrohbau (12), der eine Längsaußenseite (12C) aufweist;
einen Luftansaugkanal (24), der an dem Fahrerhausrohbau (12) angebracht ist und einen Einlass (22) aufweist, der an der Längsaußenseite (12C) angeordnet ist; und
eine Außenabdeckung (18), die den Einlass (22) abdeckt und fest an dem Fahrerhausrohbau (12) angebracht ist;
**dadurch gekennzeichnet, dass** die Außenabdeckung (18) entkoppelt von dem Einlass (22) und dem Luftansaugkanal (24) ist.

2. Nutzfahrzeug nach Anspruch 1, ferner aufweisend:
eine, vorzugsweise elastisch deformierbare, Dichtung (38), die zwischen dem Einlass (22) und der Außenabdeckung (18) angeordnet ist.

3. Nutzfahrzeug nach einem der vorherigen Ansprüche, wobei:
die Außenabdeckung (18) ein Trägerteil (30) und ein Blendenteil (32) aufweist.

4. Nutzfahrzeug nach Anspruch 3, wobei:
das Trägerteil (30) ein Blechteil, vorzugsweise ein Blechziehteil, ist; und/oder
das Trägerteil (30) an einer, vorzugsweise elastisch deformierbaren, Dichtung (38), die zwischen dem Einlass (22) und dem Trägerteil (30) angeordnet ist, anliegt; und/oder
das Trägerteil (30) mindestens einen Gitterbereich (40) aufweist, der den Einlass (22) abdeckt; und/oder
das Trägerteil (30) im Wesentlichen schalenförmig und/oder streifenförmig ist; und/oder
das Trägerteil (30) fest an dem Fahrerhausrohbau (12) angebracht ist, vorzugsweise mittels mehrerer Schraubverbindungen.

5. Nutzfahrzeug nach Anspruch 3 oder Anspruch 4, wobei:
das Blendenteil (32) ein, vorzugsweise unlackiertes oder lackiertes, Kunststoffteil ist; und/oder
das Blendenteil (32) mindestens einen, vorzugsweise kiemenförmigen, Durchlass (54) aufweist, der den Einlass (22) abdeckt; und/oder
das Blendenteil (32) im Wesentlichen schalenförmig und/oder streifenförmig ist.

6. Nutzfahrzeug nach einem der Ansprüche 3 bis 5, wobei:
das Blendenteil (32) von dem Trägerteil (30) getragen ist; und/oder
das Blendenteil (32) lösbar an dem Trägerteil (30) angebracht ist; und/oder
das Blendenteil (32) mittels einer lösbaren Führungs- und/oder Steckverbindung an dem Trägerteil (30) angebracht ist; und/oder
das Blendenteil (32) und das Trägerteil (30) im Wesentlichen miteinander übereinstimmende Außenkonturen aufweisen.

7. Nutzfahrzeug nach einem der Ansprüche 3 bis 6, wobei:
das Blendenteil (32) an dem Trägerteil (30), vorzugsweise parallel zu einer Längsachse des Nutzfahrzeugs, verschiebbar geführt ist; und/oder
das Blendenteil (32) an dem Trägerteil (30) arretierbar ist.

8. Nutzfahrzeug nach einem der Ansprüche 3 bis 7, wobei:
das Blendenteil (32) mittels einer nur fahrerhausrückseitig sichtbaren und/oder nur fahrerhausrückseitig zugänglichen Schraubverbindung (50, 52) an dem Trägerteil (30) angebracht ist.

9. Nutzfahrzeug nach einem der Ansprüche 3 bis 8, wobei:
das Blendenteil (32) mindestens ein, vorzugsweise hakenförmiges oder L-förmiges, Führungselement (46) aufweist, das in mindestens eine, vorzugsweise ausgeschnittene, Führung (42) des Trägerteils (30) eingeschoben oder einschiebbar ist, vorzugsweise parallel zu einer Längsachse des Nutzfahrzeugs.

10. Nutzfahrzeug nach Anspruch 9, wobei:
das Blendenteil (32) mindestens ein, vorzugsweise domförmiges, Arretierelement (48) aufweist, das in mindestens eine, vorzugsweise ausgeschnittene, Arretierelementaufnahme (44) des Trägerteils (30) eingreift, wenn das mindestens eine Führungselement (46) in die mindestens eine Führung (42) eingeschoben ist.

11. Nutzfahrzeug einem der Ansprüche 3 bis 10, wobei:
das Blendenteil (32) mindestens ein, vorzugsweise domförmiges, Stützelement (56) aufweist, das sich an mindestens einem, vorzugsweise erhabenen, Stützabschnitt (58) des Trägerteils (30) abstützt; und/oder
das Trägerteil (30) einen, vorzugsweise stiftförmigen und/oder elastisch deformierbaren, Anschlagpuffer (60) aufweist, der einen Anschlag an den Fahrerhausrohbau (12) begrenzt, vorzugsweise bezüglich einer Längsachse des Nutzfahrzeugs.

12. Nutzfahrzeug nach einem der vorherigen Ansprüche, wobei:
der Fahrerhausrohbau (12) mindestens einen, vorzugsweise parallel zu einer Längsachse des Nutzfahrzeugs, vorstehenden, vorzugsweise plattenförmigen, Bereich (34) aufweist, an dem die Außenabdeckung (18) fest angebracht ist; und/oder
der Fahrerhausrohbau (12) einen Dachbereich (28) aufweist, an dem die Außenabdeckung (18) fest angebracht ist; und/oder
der Fahrerhausrohbau (12) einen Kotflügelbereich (26) aufweist, an dem die Außenabdeckung (18) fest angebracht ist.

13. Nutzfahrzeug nach einem der vorherigen Ansprüche, wobei:
die Außenabdeckung (18) bezüglich einer Vorwärtsfahrtrichtung des Nutzfahrzeugs hinter einer Tür (16) des Nutzfahrzeugs angeordnet ist; und/oder
die Außenabdeckung (18) sich zwischen einem Kotflügelbereich (26) des Fahrerhausrohbaus (12) und einem Dachbereich des Fahrerhausrohbaus (12) erstreckt; und/oder
die Außenabdeckung (18) an der Längsaußenseite (12C) des Fahrerhausrohbaus (12) und/oder angrenzend an eine Rückseite (12D) des Fahrerhausrohbaus (12) angeordnet ist.

14. Nutzfahrzeug nach einem der vorherigen Ansprüche, wobei:
der Luftansaugkanal (24), vorzugsweise elastisch, entkoppelt an dem Fahrerhausrohbau (12) angebracht ist; und/oder
der Luftansaugkanal (24) mit einer Antriebseinrichtung, vorzugsweise einer Brennkraftmaschine, des Nutzfahrzeugs verbunden ist; und/oder
der Luftansaugkanal (24) bezüglich einer Vorwärtsfahrtrichtung des Nutzfahrzeugs hinter einer Tür (16) des Nutzfahrzeugs angeordnet ist.

## Claims

1. A commercial vehicle, preferably a truck, comprising:
a cab body shell (12), which comprises a longitudinal outer side (12C);
an air intake duct (24) attached to the cab body shell (12) and comprising an inlet (22) located on the longitudinal outer side (12C); and
an outer cover (18) covering the inlet (22) and fixedly attached to the cab body shell (12);
**characterized in that** the outer cover (18) is decoupled from the inlet (22) and the air intake duct (24).

2. The commercial vehicle according to claim 1, further comprising:
a, preferably elastically deformable, seal (38) arranged between the inlet (22) and the outer cover (18).

3. The commercial vehicle according to one of the preceding claims, wherein:
the outer cover (18) comprises a carrier member (30) and a cover member (32).

4. The commercial vehicle according to claim 3, wherein:
the carrier member (30) is a sheet metal member, preferably a sheet metal drawn member; and/or
the carrier member (30) bears against a, preferably elastically deformable, seal (38) arranged between the inlet (22) and the carrier member (30); and/or
the carrier member (30) comprises at least one grid region (40) covering the inlet (22); and/or
the carrier member (30) is essentially shell-shaped and/or strip-shaped; and/or
the carrier member (30) is firmly attached to the cab body shell (12), preferably by means of a plurality of screw connections.

5. The commercial vehicle according to claim 3 or 4, wherein:
the cover member (32) is a plastic part, preferably unpainted or painted; and/or
the cover member (32) comprises at least one, preferably gill-shaped, passage (54) covering the inlet (22); and/or
the cover member (32) is substantially cup-shaped and/or strip-shaped.

6. The commercial vehicle according to one of claims 3 to 5, wherein:
the cover member (32) is carried by the carrier member (30); and/or
the cover member (32) is releasably attached to the carrier member (30); and/or
the cover member (32) is attached to the carrier member (30) by means of a releasable guide and/or plug-in connection; and/or
the cover member (32) and the carrier member (30) have outer contours, which substantially correspond to one another.

7. The commercial vehicle according to one of claims 3 to 6, wherein:
the cover member (32) is displaceably guided on the carrier member (30), preferably parallel to a longitudinal axis of the commercial vehicle; and/or
the cover member (32) is lockable on the carrier member (30).

8. The commercial vehicle according to one of claims 3 to 7, wherein:
the cover member (32) is attached to the carrier member (30) by means of a screw connection (50, 52), which is only visible from the rear of the cab and/or is only accessible from the rear of the cab.

9. The commercial vehicle according to one of claims 3 to 8, wherein:
the cover member (32) comprises at least one, preferably hook-shaped or L-shaped, guide element (46), which is inserted or insertable into at least one, preferably cut-out, guide (42) of the carrier member (30), preferably parallel to a longitudinal axis of the commercial vehicle.

10. The commercial vehicle according to claim 9, wherein:
the cover member (32) has at least one, preferably dome-shaped, locking element (48), which engages in at least one, preferably cut-out, locking element receptacle (44) of the carrier member (30) when the at least one guide element (46) is inserted into the at least one guide (42).

11. The commercial vehicle according to one of claims 3 to 10, wherein:
the cover member (32) comprises at least one, preferably dome-shaped, support element (56), which is supported on at least one, preferably raised, support portion (58) of the carrier member (30); and/or
the carrier member (30) comprises a, preferably pin-shaped and/or elastically deformable, stop buffer (60), which limits a stop against the cab body shell (12), preferably with respect to a longitudinal axis of the commercial vehicle.

12. The commercial vehicle according to one of the preceding claims, wherein:
the cab body shell (12) comprises at least one, preferably plate-shaped, projecting region (34), preferably parallel to a longitudinal axis of the commercial vehicle, to which the outer cover (18) is fixedly attached; and/or
the cab body shell (12) comprises a roof area (28) to which the outer cover (18) is firmly attached; and/or
the cab body shell (12) comprises a mudguard area (26) to which the outer cover (18) is firmly attached.

13. The commercial vehicle according to one of the preceding claims, wherein:
the outer cover (18) is arranged behind a door (16) of the commercial vehicle with respect to a forward travelling direction of the commercial vehicle; and/or
the outer cover (18) extends between a mudguard region (26) of the cab body shell (12) and a roof region of the cab body shell (12); and/or
the outer cover (18) is arranged on the longitudinal outer side (12C) of the cab body shell (12) and/or adjacent to a rear side (12D) of the cab body shell (12).

14. The commercial vehicle according to one of the preceding claims, wherein:
the air intake duct (24) is attached, preferably elastically, decoupled to the cab body shell (12); and/or
the air intake duct (24) is connected to a drive device, preferably an internal combustion engine, of the commercial vehicle; and/or
the air intake duct (24) is arranged behind a door (16) of the commercial vehicle with respect to a forward travelling direction of the commercial vehicle.

## Revendications

1. Un véhicule utilitaire, de préférence un camion, comprenant :
une structure (12) de cabine de conduite, ayant un côté extérieur longitudinal (12C) ;
un conduit (24) d'admission d'air fixé à la structure (12) de la cabine de conduite et présentant une entrée (22) située sur le côté extérieur longitudinal (12C) ;
et
un couvercle extérieur (18) qui recouvre l'entrée (22) et qui est monté de manière fixe sur la structure (12) de la cabine de conduite ;
**caractérisé en ce que** le couvercle extérieur (18) est découplé de l'entrée (22) et du conduit (24) d'admission d'air.

2. Le véhicule utilitaire selon la revendication 1, comprenant en outre :
un joint d'étanchéité (38), de préférence élastiquement déformable, agencé entre l'entrée (22) et le couvercle extérieur (18).

3. Le véhicule utilitaire selon l'une des revendications précédentes, dans lequel :
le couvercle extérieur (18) comprend une partie support (30) et une partie de façade (32).

4. Le véhicule utilitaire selon la revendication 3, dans lequel :
la partie support (30) est une pièce en tôle, de préférence une pièce en tôle emboutie ; et/ou la partie support (30) est en appui sur un joint d'étanchéité (38), de préférence élastiquement déformable, agencé entre l'entrée (22) et la partie support (30) ; et/ou
la partie support (30) présente au moins une zone de grille (40) qui recouvre l'entrée (22) ; et/ou la partie support (30) est essentiellement en forme de coque et/ou de bande ; et/ou
la partie support (30) est montée de manière fixe sur la structure (12) de la cabine de conduite, de préférence au moyen de plusieurs assemblages vissés.

5. Le véhicule utilitaire selon la revendication 3 ou la revendication 4, dans lequel :
la partie de façade (32) est une partie en matière plastique, de préférence non peinte ou peinte ; et/ou la partie de façade (32) présente au moins un passage (54), de préférence en forme d'ouïes, qui recouvre l'entrée (22) ; et/ou
la partie de façade (32) est essentiellement en forme de coque et/ou de bande.

6. Le véhicule utilitaire selon l'une des revendications 3 à 5, dans lequel :
la partie de façade (32) est portée par la partie support (30) ; et/ou
la partie de façade (32) est montée de manière amovible sur la partie support (30) ; et/ou
la partie de façade (32) est montée sur la partie support (30) au moyen d'une liaison de guidage et/ou d'enfichage amovible ; et/ou
la partie de façade (32) et la partie support (30) présentent des contours extérieurs qui coïncident pour l'essentiel entre eux.

7. Le véhicule utilitaire selon l'une des revendications 3 à 6, dans lequel :
la partie de façade (32) est guidée de manière coulissante sur la partie support (30), de préférence parallèlement à un axe longitudinal du véhicule utilitaire ; et/ou
la partie de façade (32) est apte à être bloquée sur la partie de support (30).

8. Le véhicule utilitaire selon l'une des revendications 3 à 7, dans lequel :
la partie de façade (32) est montée sur la partie de support (30) au moyen d'un assemblage vissé (50, 52) visible uniquement depuis l'arrière de la cabine de conduite et/ou accessible uniquement depuis l'arrière de la cabine de conduite.

9. Le véhicule utilitaire selon l'une des revendications 3 à 8, dans lequel :
la partie de façade (32) présente au moins un élément de guidage (46), de préférence en forme de crochet ou de L, qui est inséré ou est apte à être inséré dans au moins un guide (42), de préférence découpé, de la partie support (30), de préférence parallèlement à un axe longitudinal du véhicule utilitaire.

10. Le véhicule utilitaire selon la revendication 9, dans lequel :
la partie de façade (32) présente au moins un élément d'arrêt (48), de préférence en forme de dôme, qui s'engage dans au moins un logement d'élément d'arrêt (44), de préférence découpé, de la partie de support (30), lorsque ledit au moins un élément de guidage (46) est inséré dans ledit au moins un guide (42).

11. Le véhicule utilitaire selon l'une des revendications 3 à 10, dans lequel :
la partie de façade (32) présente au moins un élément d'appui (56), de préférence en forme de dôme, qui s'appuie sur au moins une portion d'appui (58), de préférence en relief, de la partie support (30) ; et/ou
la partie support (30) présente un tampon de butée (60), de préférence en forme de tige et/ou élastiquement déformable, qui délimite une butée contre la structure (12) de la cabine de conduite, de préférence par rapport à un axe longitudinal du véhicule utilitaire.

12. Le véhicule utilitaire selon l'une des revendications précédentes, dans lequel :
la structure (12) de la cabine de conduite présente au moins une zone (34) en saillie, de préférence en forme de plaque, de préférence parallèle à un axe longitudinal du véhicule utilitaire, sur laquelle le couvercle extérieur (18) est monté fixe ; et/ou
la structure (12) de la cabine de conduite présente une zone de toit (28) sur laquelle le couvercle extérieur (18) est fixé de manière rigide ; et/ou la structure (12) de la cabine de conduite présente une zone en forme d'aile (26) sur laquelle le couvercle extérieur (18) est monté de manière fixe.

13. Le véhicule utilitaire selon l'une des revendications précédentes, dans lequel :
le couvercle extérieur (18) est agencé derrière une porte (16) du véhicule utilitaire par rapport à un sens de marche avant du véhicule utilitaire ; et/ou le couvercle extérieur (18) s'étend entre une zone en forme d'aile (26) de la structure (12) de la cabine de conduite et une zone de toit de la structure (12) de la cabine de conduite ; et/ou
le couvercle extérieur (18) est agencé sur le côté extérieur longitudinal (12C) de la structure (12) de la cabine de conduite et/ou de manière adjacente à un côté arrière (12D) de la structure (12) de la cabine de conduite.

14. Le véhicule utilitaire selon l'une des revendications précédentes, dans lequel :
le conduit (24) d'admission d'air est monté de manière découplée sur la structure (12) de la cabine de conduite, de préférence élastiquement ; et/ou
le conduit (24) d'admission d'air est relié à un dispositif d'entraînement, de préférence un moteur à combustion interne, du véhicule utilitaire ; et/ou le conduit (24) d'admission d'air est agencé derrière une porte (16) du véhicule utilitaire par rapport au sens de marche avant du véhicule utilitaire.
